(19)

Europäisches
Patentamt
European
Patent Office
Office européen
des brevets

(11) **EP 2 017 470 A1**

(12) **EUROPEAN PATENT APPLICATION**
published in accordance with Art. 153(4) EPC

(43) Date of publication:
**21.01.2009 Bulletin 2009/04**

(21) Application number: **06745763.0**

(22) Date of filing: **27.04.2006**

(51) Int Cl.:
**F03D 7/04** *(2006.01)*    **F03D 11/00** *(2006.01)*

(86) International application number:
**PCT/JP2006/308835**

(87) International publication number:
**WO 2007/129378 (15.11.2007 Gazette 2007/46)**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **The Tokyo Electric Power Co., Inc.
Tokyo 100-8560 (JP)**

(72) Inventors:
• **HIRAKATA, Naoto
 Tokyo 100-8560 (JP)**
• **TEZUKA, Hideaki
 Tokyo 100-8560 (JP)**

(74) Representative: **HOFFMANN EITLE
 Patent- und Rechtsanwälte
 Arabellastrasse 4
 81925 München (DE)**

(54) **WIND-DRIVEN ELECTRICITY GENERATION DEVICE, METHOD OF CONTROLLING WIND-DRIVEN ELECTRICITY GENERATION DEVICE, AND COMPUTER PROGRAM**

(57)    The present invention provides a wind power generation device capable of reducing collision of a flying object against a blade or bird strike. The wind power generation device includes a tower set up on the ground, a nacelle fixed to the tower, a plurality of blades rotatably fixed to the nacelle via a hub, an obstacle search device capable of detecting a flying object existing in front, on the windward side, and a blade angle controller to control the change in angle of the blade including a rotation stop position. The obstacle search device searches for the flying object continuously, and when the flying object is determined to be approaching based on the continuous searching, the blade angle controller controls to change the blades to the rotation stop position.

FIG. 1

## Description

Technical Field

The present invention relates to a technology to avoid occurrence that a flying object collides against a blade when the flying object (mainly, birds) is approaching to wind power generation device, and technologies relating thereto.

Background Art

In a place to install a wind power station, in order to know wind conditions, wind speed and wind direction are measured.

For instance, a Doppler sodar (Doppler sonic radar) oscillates a sonic wave having a fixed frequency of several thousands Hz toward air at intervals of several seconds from an arbitrary place in situ. The sonic wave collides against particles such as water vapor, dusts or the like contained in the wind in the air and reflects. The reflection wave is caught with a large cylindrical body and wind speed thereof is calculated based on the reflection wave modulated due to a Doppler effect. It is possible to calculate a wind direction by using about three pieces of cylindrical bodies for receiving and transmitting sonic waves and varying the inclination and the direction thereof respectively.

A laser Doppler (light wave radar) radiates laser light and receives scattered light from dusts floating in the air. It is a technology to determine a wind speed and a wind direction by studying the frequency displacement amount of the light since the received light is affected by the Doppler effect due to an influence of the wind.

As a technology to measure the wind direction and the wind speed of a planned area for establishing a windmill for wind power generation, there is a technology disclosed in Patent Document 1, for instance.

Patent Document 1: Japanese Patent Application Laid-open No. 2004-101265

The wind power generation device is designed conforming to the wind condition of the place where the device is installed. However, even in any wind power generation device, there is a limitation of durability to an outside force accompanying a wind power. Accordingly, in order to protect from the outside force greater than the limitation accompanying the wind power, the wind power generation device is provided with the following "limitation adjustment mechanism". That is, provided is a mechanism to select a blade angle so as to reduce rotation efficiency to the wind or so as to relieve the wind when a wind speed equal to or greater than that prescribed is expected or detected by measuring the wind speed or obtaining forecast information concerning the weather.

The wind power generation device is installed by selecting a place where wind blows stably. At a place far from an urban district, a large-scale wind power generation device is often installed in plural number of units.

At a place where wind conditions are favorable, a wind farm with several ten or several hundred units of the wind power generation devices is also developed.

In recent years, in order to improve an output per unit, the wind power generation device is upsizing. A typical large-scale wind power generation device is installed on a tower about 30 to 80 meters in height, and since the length of the blades of such a wind power generation device is 20 to 50 meters, the highest position is as tall as 130 meters from the ground.

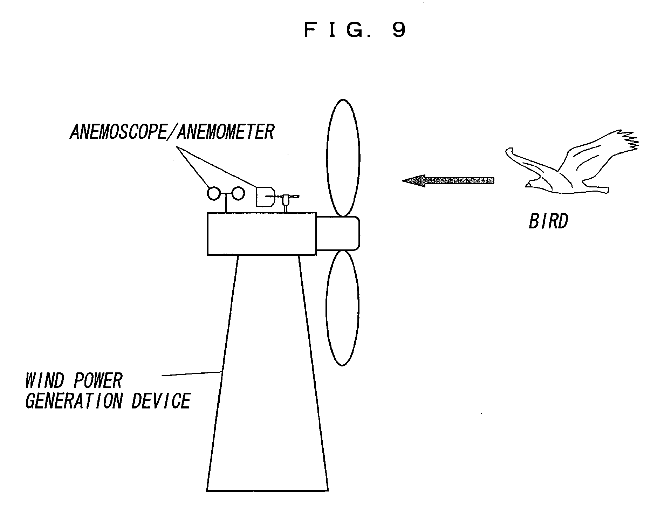

As conceptually depicted in FIG. 9, such a height sometimes corresponds to a place where birds fly, which live in the neighborhood where the wind power generation device is installed or corresponds to a height for cruising flight of migratory birds.

Meanwhile, because of difficulty for flying birds to visually recognize blades rotating at a high speed, accidents (bird strike) of collision against blades into death happen.

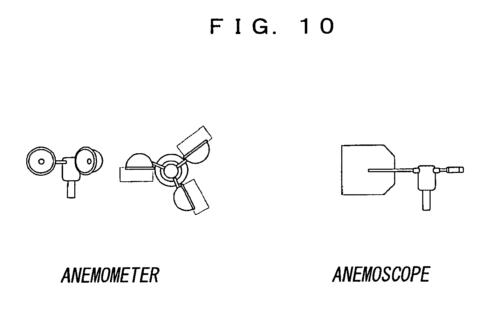

Furthermore, the device is provided with an anemometer and an anemoscope as shown in FIG. 10, but these are only for an ex post measurement, and a flying object blown off by a strong wind collides against a blade, which may result in breakage of the blade.

Disclosure of the Invention

Problems to be solved by the Invention

As for wind power generation devices that will be installed in future, it is thought that the bird strike can be avoided in some extent through information from a wild-bird protection organization or the like or by carrying out environment assessment thoroughly.

However, in the existing wind power stations, there is no means to avoid the bird strike.

In addition, since it is impossible to completely grasp movement of a bird, a living creature, and to control it, there is naturally a limitation to reduce the bird strike by carrying out environment researches or the like thoroughly.

Note that collision of a flying object blown off by a strong wind against a blade resulting in breakage of the blade should also be avoided.

In a wind power generation device, a problem to be solved by the present invention is to provide a technology enabling to reduce breakage of the blade caused by the flying object or to reduce the bird strike.

Here, an object of the inventions described in claims 1 to 4 is to provide a wind power generation device enabling to reduce the breakage of the blade caused by the flying object or to reduce the bird strike.

Further, another object of the inventions described in claims 5 to 7 is to provide a control process for the wind power generation device enabling to reduce the breakage of the blade caused by the flying object or to reduce the bird strike.

Still another object of the inventions described in claims 8 to 10 is to provide a control program for the wind power generation device enabling to reduce the breakage of the blade caused by the flying object or to reduce the bird strike.

Yet another object of the inventions described in claims 11 to 13 is, in addition to the object of the above-described inventions, to provide a technology relating to the wind power generation device enabling to reduce breakage accidents of the blade by a gust.

Means for Solving the Problem

(Claim 1)

An invention described in claim 1 relates to a wind power generation device provided with a tower set up on the ground, a nacelle fixed on the tower, a plurality of blades rotatably fixed to the nacelle via a hub, an obstacle search device capable of detecting a flying object existing in front, on the windward side, and a blade angle controller to control the change in angle of the blade including a rotation stop position,

in which when the obstacle search device detects the flying object, the blade angle controller controls to change the blade to the rotation stop position.

(Explanation of Terms)

The word "flying objects" includes an object blown off by the wind, other than a living creature such as birds.

"The obstacle search device" is a device to oscillate a sonic wave or an electromagnetic wave, and to ascertain the presence of the flying object by seizing the reflection waves, a device to confirm the presence of the flying object based on an image pickup or image analysis, or a device to detect a living creature such as birds or the like by thermal detection, etc. In order to detect the flying object in front on the windward side, it is used in combination of an anemoscope. Note that since the wind power generation device is designed to face toward the windward side, it is recommendable to allow the obstacle search device to move in synchronization with the wind power generation device by, for instance, installing it in the hub of the wind power generation device.

"The rotation stop position" designates a position at which the blades do not rotate even when the blades undergo wind, and it is typically a feathering position or sufficient deceleration of a rotational speed. It also includes the case of using a brake secondarily to stop the rotation of the blade or the case of stopping the rotation of the blade using the brake as a main means. A means to control braking of the rotation includes a pitch controller which changes pitch angles of all blades and a stall controller which allows to select a blade shape and the pitch angle so as to lose lift, and at the same time, changes the direction of the blade top to 90° to serve as a brake when to stop.

Note that the wind power generation device is often formed to allow it to select a position to reduce rotational efficiency according to a strong wind other than the feathering position. This is because if the rotation is completely stopped, it will take a long time to resume the operation, but in the case of sufficient deceleration, it is easy to resume the operation, which makes it possible to reduce power-generation loss.

(Operation)

The wind power generation device relating to the present claim generates electricity by rotation of the blades when undergoing wind. Here, the obstacle search device is supposed to detect a flying object on the windward side. Then, the blade angle controller controls to change the blades to the rotation stop position. As a result, the rotation of the blades stops or decelerates sufficiently.

When a blade stops or decelerates sufficiently, since it is easy for a flying bird to visually recognize the blade, the possibility of the bird to avoid the blade by itself is increased. Since the blade is often formed in a slim shape with about three sheets of the blade fixed in a radial form from the hub, it is possible to lower the possibility of collision against the blade even when the flying object is only an object other than birds.

(Claim 2)

An invention described in claim 2 also relates to a wind power generation device provided with a tower set up on the ground, a nacelle fixed on the tower, a plurality of blades rotatably fixed to the nacelle via a hub, an obstacle search device capable of detecting a flying object in front, on the windward side, and a blade angle controller to control change in angle of the blades including a rotation stop position,

in which the obstacle search device searches for the flying object continuously, and when the flying object is determined to be approaching based on the continuous search, the blade angle controller controls to change the blades to the rotation stop position.

(Explanation of Terms)

"The obstacle search device" is provided with functions to store data concerning a flying object for a prescribed period of time or to conduct comparative computation comparing with just previous data for the purpose of searching for the flying object continuously. When the flying object is a bird, it sometimes flies with a speed faster than the wind speed.

(Operation)

A point different from the invention in claim 1 is to control to change the blades to the rotation stop position only when the flying object approaches. Since the present invention determines whether or not the flying object is approaching, when it detects the flying object once but determines that it will not approach, the possibility of collision is low and the device can continue generation of electricity without stopping it in vain.

Note that the wind power generation device is effective for the cases when the movement of the flying object is very fast, or when it is unpredictable with the wind power generation device described in claim 1 as for whether or not the flying object is approaching or whether or not the possibility of collision is high, even by continuous detection.

(Claim 3)

The invention described in claim 3 is to limit the wind power generation device according to any one of claim 1 and claim 2.

That is, the wind power generation device further includes an arrival time calculator to calculate an estimated arrival time of the flying object detected by the obstacle search device,

in which the blade angle controller controls to change the blade angle to the rotation stop position before the estimated arrival time is reached.

(Explanation of Terms)

"The arrival time calculator" continuously searches for the flying object and estimates the arrival time of the flying object from speed of sound and distance when the obstacle search device uses a sonic wave or an electromagnetic wave.

In other words, it is necessary to search for the flying object being away in the distance sufficiently far to ensure the time (for instance, about 5 seconds) required for the blade angle controller to change the blade angle so as to stop the rotation of the blades when the device detects approaching of the flying object and determines to stop rotation.

(Operation)

The arrival time calculator calculates an estimated arrival time of the flying object detected by the obstacle search device. Then, the blade angle controller controls to change a blade angle to the rotation stop position before the estimated arrival time is reached. As a result, it is possible to increase the possibility of preventing breakage of the blade by the flying object or bird strike in advance.

(Claim 4)

The invention described in claim 4 is to limit the wind power generation device according to any one of claim 1 to claim 3.

That is, it relates to the wind power generation device in which the obstacle search device can perform a wide-angle search and a narrow-angle search, and carries out the wide-angle search until the flying object is detected. When the flying object is detected, the obstacle search device shifts to the narrow-angle search taking aim at the flying object, and determines whether or not the flying object is approaching.

(Operation)

It is good for the angle at which the obstacle search device can search to be as wide as possible. However, when the speed of wind is fast, and the speed of the flying object is also fast, an error in seizing continuous movement of the flying object and in calculating an estimated arrival time increases in the case of carrying out the wide-angle search.

Therefore, adopted is a configuration to change the obstacle search device into the narrow-angle search taking aim at the flying object so as to be able to determine whether or not the flying object is approaching when the flying object is detected.

(Claim 5)

The invention described in claim 5 relates to a method of controlling a wind power generation device provided with a tower set up on the ground, a nacelle fixed on the tower, and a plurality of blades rotatably fixed to the nacelle via a hub.

That is, the method of controlling the wind power generation device includes: a flying object detecting step to detect a flying object existing in front, on the windward side; and a rotation stopping step to control to change the blades to a rotation stop position when the flying object is detected by the flying object detecting step.

(Claim 6)

The invention described in claim 6 relates to a method of controlling a wind power generation device provided with a tower set up on the ground, a nacelle fixed on the tower, and a plurality of blades rotatably fixed to the nacelle via a hub.

That is, the method of controlling the wind power generation device includes: a flying object detecting step to continuously search for a flying object; a flying object approach detecting step to determine whether or not the flying object is approaching when the flying object is detected by the flying object detecting step; and a rotation stopping step to change the blades to a rotation stop position when the flying object approach detecting step determines the approach of the flying object.

(Claim 7)

The invention described in claim 7 is to limit the method of controlling the wind power generation device according to any one of claim 5 and claim 6.

That is, the method of controlling the wind power generation device further includes: an arrival time calculating step to calculate an estimated arrival time of the flying object when the flying object is detected by the flying object detecting step, in which the rotation stopping step is to change the blades to the rotation stop position before the estimated arrival time is reached.

(Claim 8)

The invention described in claim 8 relates to a control program of a wind power generation device provided with a tower set up on the ground, a nacelle fixed on the tower, and a plurality of blades rotatably fixed to the nacelle via a hub.

The control program is a computer program forcing a control computer of the wind power generation device to execute a flying object detecting step to detect a flying object, and a rotation stopping step to control to change the blades to a rotation stop position when the flying object is detected by the flying object detecting step.

(Claim 9)

The invention described in claim 9 also relates to a control program of a wind power generation device provided with a tower set up on the ground, a nacelle fixed on the tower, and a plurality of blades rotatably fixed to the nacelle via a hub.

The control program is a computer program forcing a control computer of the wind power generation device to execute: a flying object detecting step to search for a flying object continuously; a flying object approach detecting step to determine whether or not the flying object is approaching when the flying object is detected by the flying object detecting step; and a rotation stopping step to change the blades to a rotation stop position when the flying object approach detecting step determines the approach of the flying object.

(Claim 10)

The invention described in claim 10 is to limit the computer program according to any one of claim 8 and claim 9.

That is, the computer program further includes an arrival time calculating step to calculate an estimated arrival time of the flying object when the flying object is detected by the flying object detecting step, in which the rotation stopping step is to change the blades to the rotation stop position before the estimated arrival time is reached.

(Claim 11)

The invention described in claim 11 is to limit the wind power generation device according to any one of claim 1 to claim 4.

That is, the present invention relates to the wind power generation device in which the nacelle or the hub includes a Doppler anemometer capable of measuring the frontward wind speed by oscillating and receiving a sonic wave or an electromagnetic wave, and when the Doppler anemometer detects a wind speed equal to or greater than a prescribed speed, the blade angle controller changes the blade angle so as not to break the blade by the wind speed.

(Explanation of Terms)

"The Doppler anemometer" is an anemometer oscillating a sonic wave or an electromagnetic wave to calculate a wind speed by measuring the difference in speed based on a Doppler effect of the sonic wave or the electromagnetic wave, which collides with or reflects from a reflector such as a dust or the like contained in the wind. The position on which the anemometer is installed is inside the hub, an upper part of the nacelle or in the lateral direction thereof.

(Operation)

The wind speed on the windward side of the wind power generation device is measured with the Doppler anemometer applying a Doppler effect by oscillating and receiving a sonic wave or an electromagnetic wave. When the Doppler anemometer detects a wind speed at a prescribed value or more, the blade angle controller changes the blade angle. For instance, when detecting a wind speed equal to or more than a limited value, the wind is allowed to escape by changing to the feathering so as to reduce damages to the blade or to the tower.

Through the above-described operation, it is possible to take gust-prevention measures such as change of the blade angle or the like by detecting a gust in advance without necessitating an observation tower.

(Claim 12)

The invention described in claim 12 is to limit the method of controlling the wind power generation device according to any one of claim 5, claim 6 and claim 7.

That is, the present invention relates to the method of controlling the wind power generation device,

in which the wind power generation device includes a Doppler anemometer capable of measuring the frontward wind speed by oscillating and receiving a sonic wave or an electromagnetic wave, and

the method of controlling the wind power generation device including: a flying object detecting step to detect the flying object existing in front, on the windward side; and a rotation stopping step to control to change the blades to the rotation stop position when detecting the flying object by the flying object detecting step.

(Claim 13)

The invention described in claim 13 is to limit the computer program according to any one of claim 8, claim 9 and claim 10.
That is, the present invention relates to the computer program, in which the wind power generation device further includes a Doppler anemometer capable of measuring the frontward wind speed by oscillating and receiving a sonic wave or an electromagnetic wave, and the computer program forces the control computer of the wind power generation device to execute a flying object detecting step to detect the flying object existing in front, on the windward side; and a rotation stopping step to control to change the blades to the rotation stop position when detecting the flying object by the flying object detecting step.

It is possible to make the computer program relating to claim 8 to claim 10 and claim 13 into a chip to be a blade control device of the wind power generation device. It is also possible to store it in a recording medium to be provided. Here, "the recording medium" is a medium that can hold a program unable to occupy a space by itself, and, for instance, a flexible disk, a hard disk, a CD-R, an optical magnetic disk (MO), DVD-R or the like can be listed.

Effect of the Invention

According to the inventions described in claims 1 to 4, it becomes possible to provide a wind power generation device capable of reducing breakage of a blade due to a flying object or bird strike.
In addition, according to the inventions described in claims 5 to 7, it becomes possible to provide a control process for the wind power generation device capable of reducing breakage of the blade due to a flying object or bird strike.

Furthermore, according to the inventions described in claims 8 to 10, it becomes possible to provide a control program for the wind power generation device capable of reducing breakage of the blade due to a flying object or bird strike.
Still further, according to the inventions described in claims 11 to 13, in addition to the above-described objects of the inventions, it becomes possible to provide a technology relating to the wind power generation device capable of reducing a breakage accident of the blade due to gusts.

Brief Description of Drawings

FIG. 1 is a conceptual view showing a first embodiment;
FIG. 2 is a flow chart showing an example of control;
FIG. 3 is a graph showing the wind speed and the amount of electricity generation;
FIG. 4 is a conceptual view showing a second embodiment;
FIG. 5 is a conceptual view showing image pickup and image analysis;
FIG. 6 is an image view of an emission wave and a reflection wave when a flying object is in presence;
FIG. 7 is an image view of an emission wave and a reflection wave when the flying object is in absence;
FIG. 8 is a conceptual view showing a third embodiment;
FIG. 9 is a conceptual view showing a conventional wind power generation device; and
FIG. 10 is a view showing a typical anemoscope and anemometer.

Best Mode for Carrying out the Invention.

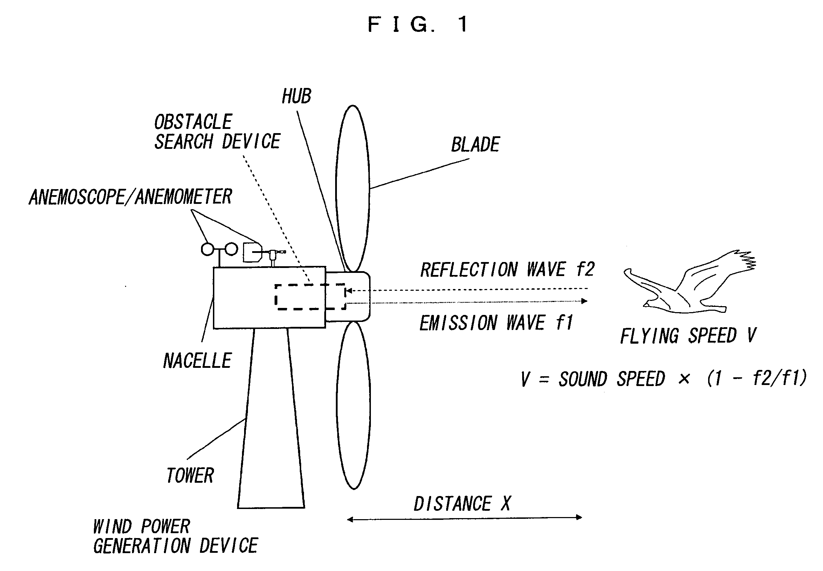

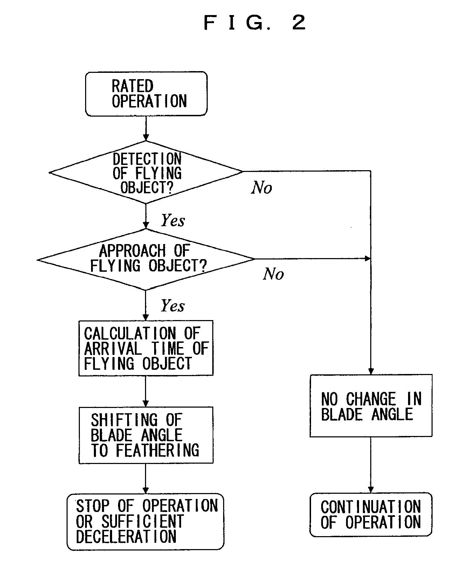

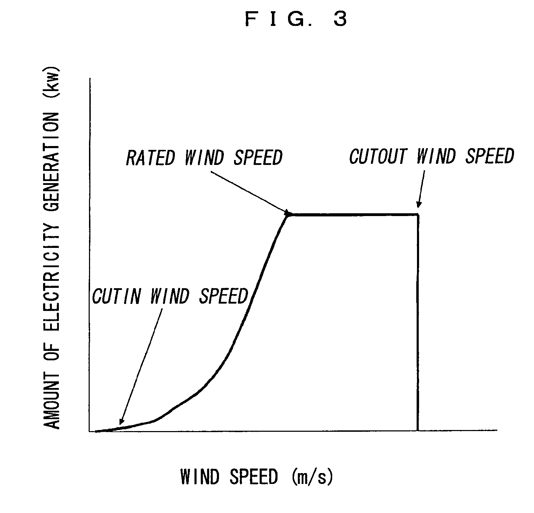

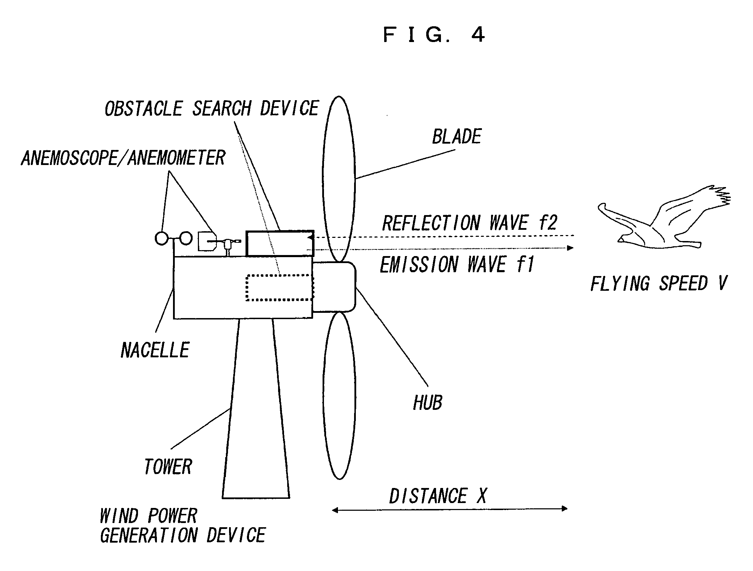

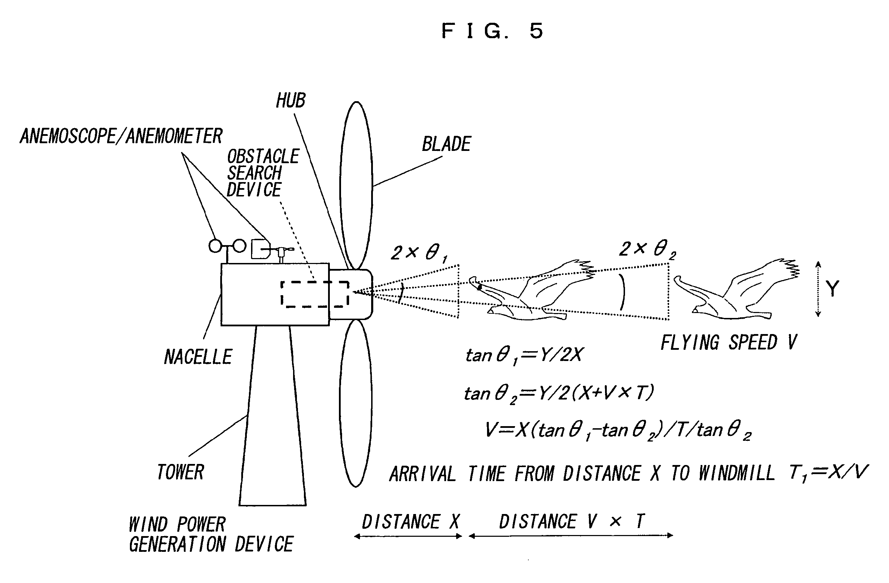

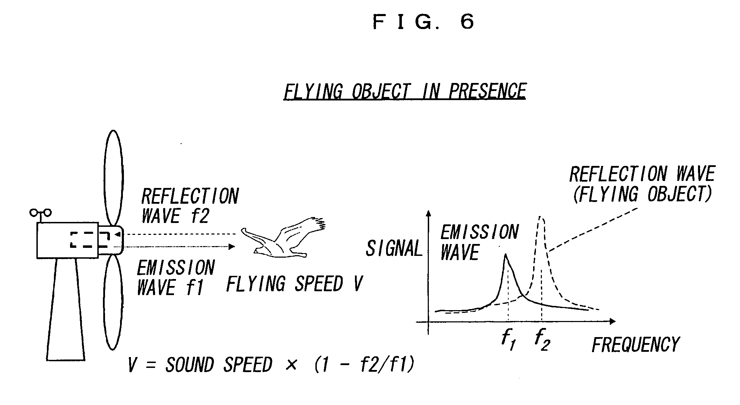

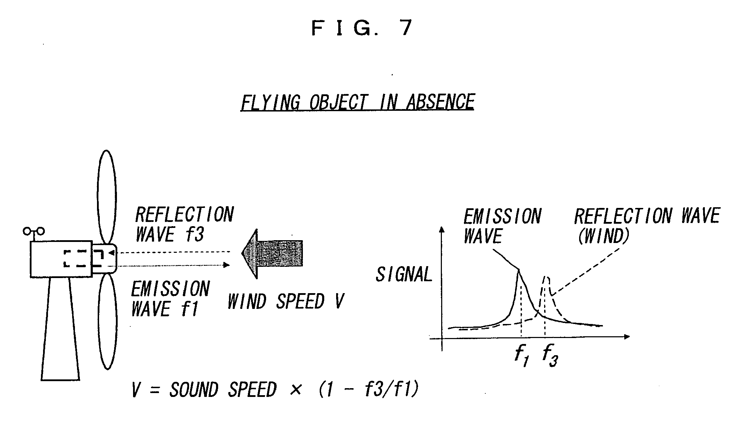

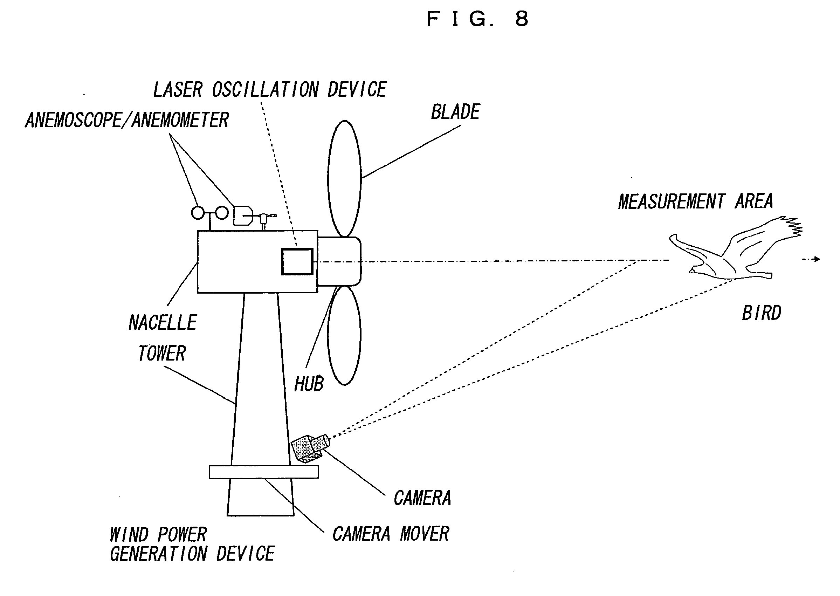

Embodiments of the present invention will be explained referring to the drawings. The drawings to be used here are FIG. 1 to FIG. 7. FIG. 1 is a conceptual view showing a first embodiment, and FIG. 2 is a flow chart showing a control process. FIG. 3 is a graph showing the wind speed and the amount of electricity generation. FIG. 4 is a conceptual view of a second embodiment. FIG. 5 is a conceptual view showing image pickup and image analysis. FIG. 6 is an image view of an emission wave and a reflection wave when a flying object is in presence. FIG. 7 is an image view of an emission wave and a reflection wave when the flying object is absence. FIG. 8 is a conceptual view showing a third embodiment

(First Embodiment)

The first embodiment shown in FIG. 1 relates to a wind power generation device including a tower set up on the ground, a nacelle fixed on the tower, a plurality of blades rotatably fixed to the nacelle via a hub, an obstacle search device capable of detecting the flying object in front, on the windward side, and a blade angle controller to control change in the blade angle including a rotation stop position.

As for the obstacle search device, adopted is not a device to ascertain the presence of the flying object based on the image pickup and the image analysis, but a device to ascertain the presence of the flying object by oscillating a sonic wave or an electromagnetic wave and seizing its reflection wave.
Note that when a thermal detector is used, though it can detect only the flying object such as a living creature like birds having a higher temperature than its surrounding temperature, it has an advantage that at night or under a bad weather such as driving snow, the detection of the flying object can be performed more accurately than the detection with the obstacle search device transmitting a sonic wave or an electromagnetic wave.

The nacelle is provided with an anemoscope, and by an output obtained from the anemoscope, the wind power generation device faces the windward. The obstacle search device is a device that oscillates a sonic wave or an electromagnetic wave (emission wave f1), and ascertains the presence of the flying object by seizing the reflection wave (f2). The obstacle search device is disposed in the hub of the wind power generation device and operates in synchronization with the wind power generation device.

When the obstacle search device ascertains the presence of the flying object, it is controlled in a manner as shown in a flow chart shown in FIG. 2.

(FIG. 2)

FIG. 2 shows an example of the control. The wind power generation device generates electricity by rotation of the blades caused by receiving wind. Here, if the obstacle search device does not detect the flying object on the windward side, it continues the operation.

When the flying object is detected, then the obstacle search device stores data on the flying object for a prescribed period of time or conducts comparison computation with data obtained immediately before by searching the flying object continuously. When the flying object approaches, the estimated arrival time of the flying object is calculated from the flying speed V and its distance X and a blade angle controller controls to change the blade to a rotation stop position (feathering). Then, the rotation of the blade is stopped before the estimated arrival time of the flying object.

Note that the control program described above is included in the blade control device.

Since a flying bird is easy to visually recognize a blade if the blade is stopped, the possibility of avoiding it by itself increases. Since there are many blades in a slim shape with about three sheets of blades fixed radially from a hub, even when the flying object is only an object other than birds, the possibility of collision against the blade can be lowered. Since whether or not the flying object is approaching is determined, if the obstacle search device once detects a flying object but determines that it will not approach, the possibility of collision is low, and it can avoid meaningless suspension of the electricity generation.

(FIG. 3)

FIG. 3 shows a relation between the wind speed and the amount of electricity generation. The blades are adjusted so that the wind power generation device can be operated at a rated wind speed. When the wind speed is at a prescribed speed (cut out wind speed) or higher, the electricity generation is suspended due to the feathering. In the present embodiment, when the flying object is approaching, change to the feathering is also executed.

(FIG. 4)

The embodiment shown in FIG. 4 differs from the embodiment shown in FIG. 1, and the obstacle search device is not embedded in the hub, but it is mounted on the nacelle. When the blades are in rotation, it may disturb the operation of the obstacle search device, but the oscillation timing of a sonic wave or an electromagnetic wave should be controlled so as to avoid the blades in rotation.

According to the wind power generation device relating to the embodiments explained above, it becomes possible to provide a wind power generation device capable of reducing collision of the flying object to the blade or bird strike.

When the obstacle search device explained above is installed on a wind farm, it is desirable that all wind power generation devices be provided with obstacle search devices.

However, in the case that the obstacle search device cannot be provided to every wind power generation device, when the obstacle search device detects an obstacle, control of the blade angle is contrived to be executed even for the device without the obstacle search device. Then, it contributes to reduce collision of the flying object to the blade or bird strike.

In the above-described embodiment, although the explanation is made on the wind power generation device developed in consideration of the bird strike occurring on the windward side, it is naturally possible to provide a plurality of obstacle search devices around the periphery of the wind power generation device or the wind farm. This is because only the windward side is necessary to be taken into account for the flying object, but birds may fly regardless of the wind direction.

When any obstacle search device among the plural obstacle search devices detects an obstacle, the wind power generation device against which collision is expected or all wind power generation devices are controlled to achieve feathering or sufficient deceleration.

(FIG. 5)

The obstacle search device by image pickup and image analysis will be explained further in detail based on FIG. 5.

When the obstacle search device detects the flying object, the vertical length in which the flying object can be fallen is assumed to be Y. In addition, half of a search angle of the obstacle search device within which the obstacle search device can seize the flying object is assumed to be 0. Further, it is assumed that the time at which the flying object is first detected is T2, the search angle at this time is $\theta 2$, the time taken for the flying object to arrive at the wind power generation device is T1, the search angle at this time is $\theta 1$, the distance to which the flying object can arrive in T1 is X, and the flying speed of the flying object (flying speed including the wind speed) is V.

Then,

$$\tan\theta 1 = Y/2X$$

$$\tan\theta 2 = Y/2(X + V \times T)$$

$$V = X(\tan\theta 1 - \tan\theta 2)/T/\tan\theta 2$$

The time T1 required for the arrival at the wind power generation device can be expected as

$$T1 = X/V$$

(FIG. 6)

FIG. 6 shows how the emission wave (f1) and the reflection wave (f2) are seized in a relation between signals and frequencies when the flying object is in presence. It is an actual example that the reflection wave (f2) is greater than the emission wave (f1) in both signal and frequency.

(FIG. 7)

FIG. 7 shows how the emission wave (f1) and the reflection wave (f3) are seized in the relation between signals and frequencies when the flying object is in absence (in other words, when only wind blows). Although the reflection wave (f2) is greater than the emission wave (f1) in frequency, it does not change so much as when the flying object is in presence.

It is also possible to provide with control algorithms which store data based on an actual example as shown in FIG. 6 and FIG. 7, instantaneously execute comparison with stored data and determine whether or not the flying object is approaching.

(FIG. 8)

As a device to detect a flying object, the embodiment shown in FIG. 8 is not a device to ascertain the presence of the flying object by oscillating a sonic wave or an electromagnetic wave and by seizing its reflection wave, but a device to ascertain the presence of the flying object based on the image pickup and the image analysis is adopted.
In other words, it detects the approach of the flying object in a two dimensional plane by irradiating laser beams to fine particles (tracer) mixed in fluid, continuously obtaining their scattered light as an image and determining a traveling distance of the particles.

This flying object detection device includes a laser-oscillation device embedded in the hub, a ring-shaped camera mover fixed on the tower near the ground and moving around the tower, and a camera fixed on the surrounding of the upper surface of the camera mover to be movable around the tower.
The camera is a CCD or a C-MOS sensor and photographs a sheet-like laser beam, which a laser-oscillation device emits from below. The camera is formed so as to move above the camera mover so that it faces the windward side in synchronization with the nacelle based on the wind direction that the anemoscope/anemometer detects.

Firstly, the laser-oscillation device irradiates the sheet-like laser beam toward the windward side of the wind power generation device. Then, the tracer seized by the laser beam irradiated to a flowing field is continuously obtained as photographed image data by the camera. At this time, the timing of photographing by the camera is synchronized with the laser beam by a controller. The photographed image data continuously obtained are processed for wind condition analysis with an image processing means of a computer. That is, even when the approach of the flying object is detected by the image analysis, it is possible to prevent, in advance, a breakage accident of the blade caused by gust through controlling a blade angle or the like.

Note that it is also possible to get the information of wind speed or wind direction on the windward side by using plural photographed image data thus obtained. When the wind speed is at a prescribed value or more, it is possible to prevent, in advance, a break accident of the blade caused by gust through controlling a blade angle or the like.

**Claims**

1. A wind power generation device comprising: a tower set up on the ground; a nacelle fixed on the tower; a plurality of blades rotatably fixed to the nacelle via a hub; an obstacle search device capable of detecting a flying object in front, on the windward side; and a blade angle controller to control the change in angle of the blades including a rotation stop position, wherein the blade angle controller controls to change the blade to the rotation stop position, when the obstacle search device detects the flying object.

2. A wind power generation device comprising: a tower set up on the ground; a nacelle fixed on the tower; a plurality of blades rotatably fixed to the nacelle via a hub; an obstacle search device capable of detecting a flying object in front, on the windward side; and a blade angle controller to control the change in angle of the blades including a rotation stop position,

wherein said obstacle search device searches for the flying object continuously, and when the flying object is determined to be approaching based on the continuous search, said blade angle controller controls to change the blades to the rotation stop position.

3. The wind power generation device according to any one of claim 1 and claim 2, further comprising:

an arrival time calculator to calculate an estimated arrival time of the flying object detected by said obstacle search device, wherein said blade angle controller controls to change the blade angle to the rotation stop position before the estimated arrival time is reached.

4. The wind power generation device according to any one of claim 1 to claim 3, wherein said obstacle search device can perform a wide-angle search and a narrow-angle search, and said obstacle search device carries out the wide-angle search until the flying object is detected, and shifts to the narrow-angle search taking aim at the flying object, and determines whether or not the flying object is approaching, when the flying object is detected.

5. A method of controlling a wind power generation device provided with a tower set up on the ground, a nacelle fixed on the tower, and a plurality of blades rotatably fixed to the nacelle via a hub, said method of controlling the wind power generation device, comprising:

a flying object detecting step to detect a flying object existing in front, on the windward side; and a rotation stopping step to control to change said blades to a rotation stop position when the flying object is detected by the flying object detecting step.

6. A method of controlling a wind power generation device provided with a tower set up on the ground, a nacelle fixed on the tower, and a plurality of blades rotatably fixed to the nacelle via a hub, said method of controlling the wind power generation device, comprising:

a flying object detecting step to continuously search for a flying object; a flying object approach detecting step to determine whether or not the flying object is approaching when the flying object is detected by the flying object detecting step; and a rotation stopping step to change said blades to a rotation stop position when the flying object approach detecting step determines the approach of the flying object.

7. The method of controlling the wind power generation device according to any one of claim 5 and claim 6, further comprising:

an arrival time calculating step to calculate an estimated arrival time of the flying object when the flying object is detected by the flying object detecting step, wherein the rotation stopping step is to change the blades to the rotation stop position before the estimated arrival time is reached.

8. A control program of a wind power generation device comprising: a tower set up on the ground, a nacelle fixed on the tower, and a plurality of blades rotatably fixed to the nacelle via a hub, the control program being a computer program forcing a control computer of the wind power generation device to execute:

a flying object detecting step to detect a flying object, and a rotation stopping step to control to change said blades to a rotation stop position when the flying object is detected by the flying object detecting step.

9. A control program of a wind power generation device comprising: a tower set up on the ground; a nacelle fixed on the tower; and a plurality of blades rotatably fixed to the nacelle via a hub, the control program being a computer program forcing a control computer of the wind power generation device to execute:

a flying object detecting step to continuously search for the flying object; a flying object approach detecting step to determine whether or not the flying object is approaching when the flying object is detected by the flying object detecting step; and a rotation stopping step to change the blades to a rotation stop position when the flying object approach detecting step determines the approach of the flying object.

10. The computer program according to any one of claim 8 and claim 9, further comprising the steps of:

an arrival time calculating step to calculate an estimated arrival time of the flying object when the flying object is detected by the flying object detecting step, wherein the rotation stopping step is to change the blades to the rotation stop position before the estimated arrival time is reached.

11. The wind power generation device according to any one of claim 1 to claim 4, wherein the nacelle or the hub comprises a Doppler anemometer capable of measuring the frontward wind speed by oscillating and receiving a sonic wave or an electromagnetic wave, and when the Doppler anemometer detects a wind speed equal to or greater than a prescribed speed, the blade angle controller changes the blade angle so as not to break the blades by the wind speed.

12. The method of controlling the wind power generation device according to any one of claim 5, claim 6 and claim 7, wherein the wind power generation device further comprises a Doppler anemometer capable of measuring the frontward wind speed by oscillating and receiving a sonic wave or an electromagnetic wave, and the method of controlling the wind power generation device comprising:

a flying object detecting step to detect the flying object existing in front, on the windward side, and a rotation stopping step to control to change the blades to the rotation stop position when detecting the flying object by the flying object detecting step.

13. The computer program according to any one of claim 8, claim 9 and claim 10, wherein the wind power generation device further comprises a Doppler anemometer capable of measuring the frontward wind speed by oscillating and receiving a sonic wave or an electromagnetic wave, and the computer program forces the control computer of the wind power generation device to execute:

a flying object detecting step to detect the flying object existing in front, on the windward side; and a rotation stopping step to control to change the blades to the rotation stop position when detecting the flying object by the flying object detecting step.

# F I G. 1

OBSTACLE
SEARCH DEVICE

HUB

BLADE

ANEMOSCOPE/ANEMOMETER

REFLECTION WAVE f2

EMISSION WAVE f1

FLYING SPEED V

NACELLE

$$V = SOUND\ SPEED \times (1 - f2/f1)$$

TOWER

DISTANCE X

WIND POWER
GENERATION DEVICE

EP 2 017 470 A1

# F I G. 2

```
              ┌──────────────┐
              │  RATED       │
              │  OPERATION   │
              └──────┬───────┘
                     │
                     ▼
                  ╱──────╲
                 ╱DETECTION╲
                ╱ OF FLYING ╲────── No ───────┐
                ╲  OBJECT?  ╱                  │
                 ╲─────────╱                   │
                     │ Yes                     │
                     ▼                         │
                  ╱──────────╲                 │
                 ╱ APPROACH OF╲                │
                ╱ FLYING OBJECT?╲─── No ───────┤
                 ╲─────────────╱               │
                     │ Yes                     │
                     ▼                         │
             ┌────────────────┐                │
             │ CALCULATION OF │                │
             │ ARRIVAL TIME OF│                │
             │ FLYING OBJECT  │                │
             └───────┬────────┘                ▼
                     │              ┌──────────────┐
                     ▼              │ NO CHANGE IN │
             ┌────────────────┐     │ BLADE ANGLE  │
             │ SHIFTING OF    │     └──────┬───────┘
             │ BLADE ANGLE    │            │
             │ TO FEATHERING  │            │
             └───────┬────────┘            │
                     │                     ▼
                     ▼              ┌──────────────┐
           ┌──────────────────┐    │ CONTINUATION │
           │ STOP OF OPERATION│    │ OF OPERATION │
           │ OR SUFFICIENT    │    └──────────────┘
           │ DECELERATION     │
           └──────────────────┘
```

EP 2 017 470 A1

# FIG. 3

AMOUNT OF ELECTRICITY GENERATION (kw)

RATED WIND SPEED

CUTOUT WIND SPEED

CUTIN WIND SPEED

WIND SPEED (m/s)

# FIG. 4

OBSTACLE SEARCH DEVICE

ANEMOSCOPE/ANEMOMETER

BLADE

REFLECTION WAVE f2

EMISSION WAVE f1

FLYING SPEED V

NACELLE

HUB

TOWER

DISTANCE X

WIND POWER
GENERATION DEVICE

EP 2 017 470 A1

# FIG. 5

ANEMOSCOPE/ANEMOMETER

OBSTACLE
SEARCH
DEVICE

HUB

BLADE

NACELLE

TOWER

WIND POWER
GENERATION DEVICE

$2 \times \theta_1$

$2 \times \theta_2$

$Y$

FLYING SPEED $V$

$\tan \theta_1 = Y/2X$

$\tan \theta_2 = Y/2(X + V \times T)$

$V = X(\tan \theta_1 - \tan \theta_2)/T/\tan \theta_2$

ARRIVAL TIME FROM DISTANCE $X$ TO WINDMILL $T_1 = X/V$

DISTANCE $X$     DISTANCE $V \times T$

# FIG. 6

## <u>FLYING OBJECT IN PRESENCE</u>

REFLECTION WAVE f2

EMISSION WAVE f1    FLYING SPEED V

REFLECTION WAVE (FLYING OBJECT)

SIGNAL

EMISSION WAVE

$f_1$  $f_2$  FREQUENCY

$V = SOUND\ SPEED \times (1 - f2/f1)$

EP 2 017 470 A1

# FIG. 7

## FLYING OBJECT IN ABSENCE

REFLECTION WAVE f3

EMISSION WAVE f1   WIND SPEED V

$V = SOUND\ SPEED \times (1 - f3/f1)$

EMISSION WAVE   REFLECTION WAVE (WIND)

SIGNAL

$f_1\ f_3$

# FIG. 8

LASER OSCILLATION DEVICE

ANEMOSCOPE/ANEMOMETER

BLADE

MEASUREMENT AREA

NACELLE

TOWER

HUB

BIRD

CAMERA

CAMERA MOVER

WIND POWER
GENERATION DEVICE

EP 2 017 470 A1

FIG. 9

ANEMOSCOPE/ANEMOMETER

BIRD

WIND POWER
GENERATION DEVICE

EP 2 017 470 A1

F I G.  1 0

ANEMOSCOPE

ANEMOMETER

## INTERNATIONAL SEARCH REPORT

| | International application No. |
|---|---|
| | PCT/JP2006/308835 |

**A. CLASSIFICATION OF SUBJECT MATTER**
*F03D7/04*(2006.01)i, *F03D11/00*(2006.01)i

According to International Patent Classification (IPC) or to both national classification and IPC

**B. FIELDS SEARCHED**

Minimum documentation searched (classification system followed by classification symbols)
F03D7/04, F03D11/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | CD-ROM of the specification and drawings annexed to the request of Japanese Utility | 1-2,5-6,8-9, 11-13 |
| A | Model Application No. 30446/1993(Laid-open No. 80868/1994) (Yasuhiko KAMOSHIDA), 15 November, 1994 (15.11.94), Par. Nos. [0002] to [0004]; Figs. 1 to 3 (Family: none) | 3-4,7,10 |
| Y | JP 2003-148321 A (Mitsubishi Heavy Industries, Ltd.), | 1-2,5-6,8-9, 11-13 |
| A | 21 May, 2003 (21.05.03), Par. Nos. [0002] to [0003]; Fig. 4 (Family: none) | 3-4,7,10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 July, 2006 (25.07.06) | 08 August, 2006 (08.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/308835

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-285858 A (Mitsubishi Electric Corp.), 14 October, 2004 (14.10.04), Claims (Family: none) | 11-13 |
| A | JP 2003-21046 A (Sanyo Electric Co., Ltd.), 24 January, 2003 (24.01.03), Claims (Family: none) | 1 |
| E,X | JP 2006-125266 A (The Tokyo Electric Power Co., Inc.), 18 May, 2006 (18.05.06), Full text (Family: none) | 1-13 |

Form PCT/ISA/210 (continuation of second sheet) (April 2005)

**EP 2 017 470 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004101265 A